# DEMANDE DE BREVET EUROPEEN

(11) **EP 2 896 322 A1**
(43) Date de publication de la demande: **22.07.2015**
(21) Numéro de dépôt: 15150946.0
(22) Date de dépôt: 13.01.2015
(51) Int. Cl.: A47B 47/04

(54) **Meuble de rangement à rideau déformable**

(30) Priorité: 17.01.2014 FR 1450397
(71) Demandeur: Co & Co, 78770 Auteuil (FR)
(72) Inventeur: Cousin, Benoît, 78770 Auteuil (FR)
(74) Mandataire: Decorchemont, Audrey Véronique Christèle

(57) **Abrégé**

L'invention concerne un meuble de rangement comportant une paroi inférieure (1), une paroi supérieure (2), deux parois latérales (3, 4) et une paroi arrière (5), les différentes parois étant conformées en des éléments indépendants emboîtés les uns dans les autres, le meuble comportant en outre un rideau (10) apte à coulisser dans des glissières (9) en vis-à-vis ménagées dans la paroi inférieure (1) et dans la paroi supérieure (2), le meuble comportant une joue interne (15, 17) délimitant avec l'une des parois latérales un caisson (16, 18).

## Description

L'invention concerne un meuble de rangement à rideau déformable.

### ARRIERE-PLAN TECHNOLOGIQUE DE L'INVENTION

Il est connu des meubles de rangement à rideau déformable s'étendant dans un plan vertical ou dans un plan horizontal.

Un tel meuble de rangement comporte usuellement une paroi inférieure, une paroi supérieure, deux parois latérales et une paroi arrière, lesdites parois formant ensemble un bâti ouvert du meuble. Ledit meuble comporte en outre un rideau déformable de fermeture du bâti qui est apte à coulisser dans des glissières en vis-à-vis ménagées respectivement dans la paroi inférieure et dans la paroi supérieure.

Un tel meuble peut cependant s'avérer délicat à monter.

### OBJET DE L'INVENTION

Un but de l'invention est de proposer un meuble de rangement à rideau déformable qui soit aisé à monter.

### BREVE DESCRIPTION DE L'INVENTION

En vue de la réalisation de ce but, on propose un meuble de rangement comportant une paroi inférieure, une paroi supérieure, deux parois latérales et une paroi arrière, lesdites parois formant ensemble un bâti ouvert du meuble, le meuble comportant en outre un rideau déformable de fermeture du bâti apte à coulisser dans des glissières en vis-à-vis ménagées respectivement dans la paroi inférieure et dans la paroi supérieure, le meuble comportant au moins une joue interne agencée entre la paroi inférieure et la paroi supérieure de sorte à faire face à l'une des parois latérales pour délimiter avec ladite paroi latérale un caisson à l'intérieur duquel ledit rideau déformable peut être rentré, les différentes parois, le rideau déformable et la joue étant conformés en des éléments indépendants, le meuble comportant uniquement des moyens d'emboîtement pour lier les différents parois et la joue interne ensemble.

Ainsi, le meuble de l'invention se monte très facilement, les différentes parois et la joue interne étant toutes emboîtées ensemble, la joue interne permettant de rigidifier l'ensemble du meuble tout en étant très simplement liée au bâti.

Par « emboîté » on entend que les différentes parois et la joue interne sont rapportées les unes sur les autres sans nécessiter la présence d'outils ou de moyens de fixation tels que des clous ou des vis ou encore de moyens d'encliquetage (permettant la retenue d'une partie ou de toutes les parois et de la joue interne les unes dans les autres).

Bien entendu, dans la présente demande, les termes « supérieur », « inférieur », « latéral » et « arrière » sont définis par rapport à la position en service du meuble de rangement de l'invention soit la position dans laquelle la paroi inférieure dudit meuble repose seule sur le sol.

### BREVE DESCRIPTION DES DESSINS

L'invention sera mieux comprise à la lumière de la description qui suit de modes de réalisation particuliers, non limitatifs, de l'invention.

Il sera fait référence aux figures ci-jointes, parmi lesquelles :
- la figure 1 est une vue schématique d'un meuble de rangement selon l'invention,
- la figure 2 est une vue éclatée du meuble illustré à la figure 1,
- la figure 3 représente le meuble illustré à la figure 1, la paroi supérieure n'étant pas représentée, le rideau déformable étant représenté en position rentrée,
- la figure 4 représente le meuble illustré à la figure 1, le rideau déformable étant représenté en position rentré.

### DESCRIPTION DETAILLEE DE L'INVENTION

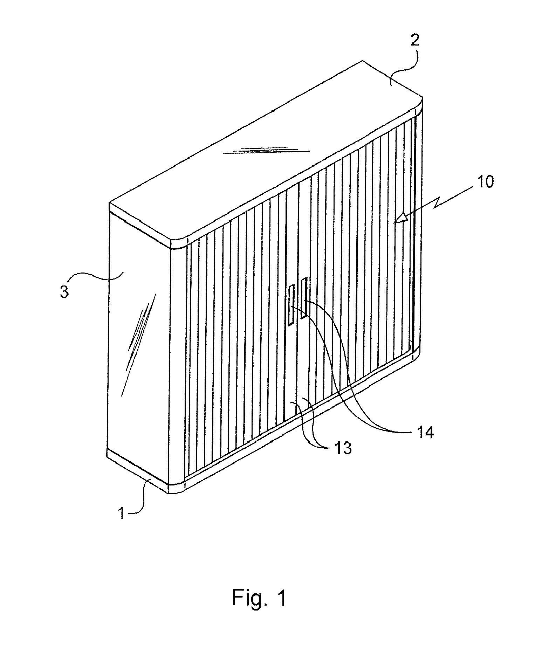

En référence aux figures 1 à 4, le meuble de rangement selon l'invention comporte une paroi inférieure 1, une paroi supérieure 2, une première paroi latérale 3, une deuxième paroi latérale 4 et une paroi arrière 5. Les deux parois latérales sont ici identiques. De même, les parois inférieures et supérieures sont ici identiques.

Les différentes parois forment ainsi ensemble un bâti ouvert du meuble qui comporte donc une face avant ouverte 6, la paroi arrière 5 formant un fond du meuble.

De façon avantageuse, les différentes parois sont conformées en des éléments indépendants emboîtés ensemble.

Selon un mode de réalisation particulier, le meuble comporte des moyens d'emboîtement de :
- la première paroi latérale 3 à respectivement la paroi supérieure 2 et à la paroi inférieure 1,
- la deuxième paroi latérale 4 à respectivement la paroi supérieure 2 et à la paroi inférieure 1.

Lesdits moyens d'emboîtement comportent par exemple des tétons 24 portés par les parois latérales venant coopérer avec des orifices 25 correspondants des parois supérieure 2 et inférieure 1.

Ici, le meuble comporte également des moyens d'emboîtement de la paroi arrière 5 à respectivement la paroi inférieure 1 et la paroi supérieure 2. Les moyens d'emboîtement comportent par exemple une rainure inférieure agencée sur la face inférieure de la paroi arrière 5, s'étendant sur toute la longueur de ladite face inférieure, et une languette 7 correspondante agencée sur la paroi inférieure 1 pour coopérer avec la rainure inférieure. De même, les moyens d'emboîtement comportent ici une rainure supérieure 8 agencée sur la face supérieure de la paroi arrière 5, s'étendant sur toute la longueur de ladite face supérieure, et une languette correspondante agencée sur la paroi supérieure 2 pour coopérer avec la rainure supérieure 8.

Des glissières 9 identiques sont ménagées dans la paroi inférieure 1 et la paroi supérieure 2 de sorte que les deux glissières 9 soient en regard l'une de l'autre lorsque le meuble est monté.

Le meuble comporte en outre un rideau 10 déformable de fermeture du bâti agencé entre les deux glissières 9 de sorte à pouvoir coulisser dans lesdites glissières 9. Le rideau est ici composé de deux parties 11, 12 déformables, chaque partie étant apte à coulisser entre les deux glissières 9 en vis-à-vis. Chaque partie 11, 12 se termine ainsi à une extrémité par un profilé rigide 13 associé à des moyens de préhension 14, les deux profilés 13 étant destinés à être en contact lorsque le rideau 10 ferme le bâti. Chaque partie 11, 12 est composée d'une pluralité de lames articulées entre elles.

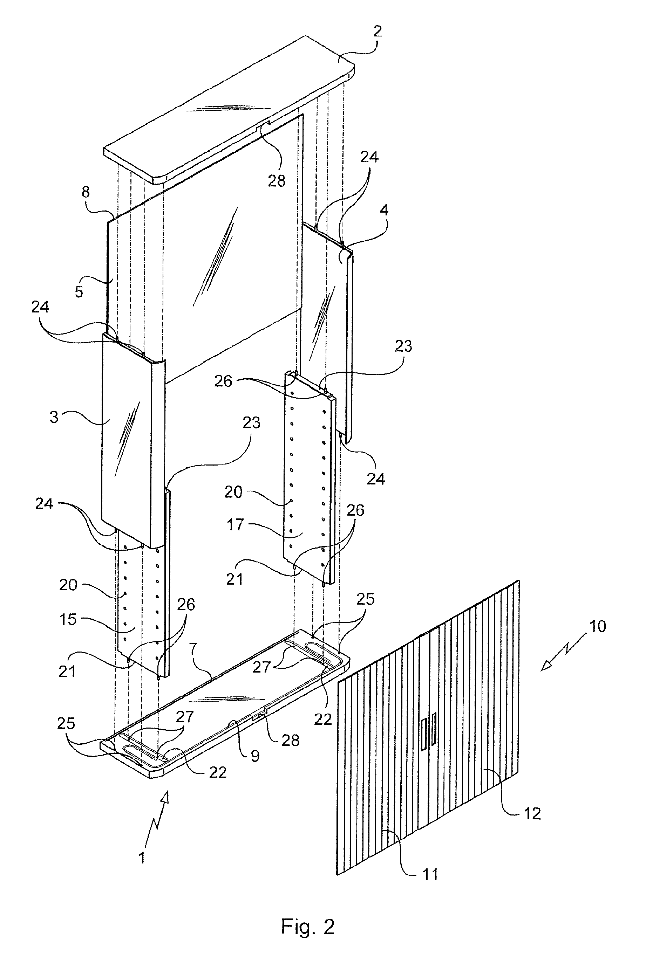

De préférence, comme visible à la figure 2, chaque glissière 9 comporte une échancrure 28 débouchant en face avant 6 du meuble, les deux échancrures étant disposées à l'aplomb l'une de l'autre et étant dimensionnées pour permettre la mise en place du rideau 10 par l'avant du meuble lors du montage du meuble. De telles échancrures sont par exemple connues du document FR 2 826 558.

Le meuble comporte ici des clips de fermeture (non visibles à la figure 2) des échancrures 28 destinés à être mis en place après la mise en place du rideau 10 ce qui permet de masquer les échancrures 28 une fois le meuble entièrement monté (comme visible aux figures 1, 3 et 4). De tels clips sont connus par exemple du document FR 2 826 558.

Selon l'invention, le meuble comporte une première joue interne 15 qui est agencée entre la paroi inférieure 1 et la paroi supérieure 2 de sorte à faire face à la première paroi latérale 3. Ainsi agencée, la première joue interne 15 délimite avec ladite paroi latérale 3 un premier caisson 16 à l'intérieur duquel la première partie 11 peut être rentrée.

Selon un mode de réalisation particulier, le meuble comporte en outre une deuxième joue interne 17 qui est agencée entre la paroi inférieure 1 et la paroi supérieure 2 de sorte à faire face à la deuxième paroi latérale 4. Ainsi agencée, la deuxième joue interne 17 délimite avec ladite paroi latérale 4 un deuxième caisson 18 à l'intérieur duquel la deuxième partie 12 peut être rentrée. La deuxième joue interne 17 est ici identique à la première joue interne 15.

Ainsi, chaque joue interne 15, 17 définit avec la paroi latérale 3, 4 associée une fente par lequel la partie de rideau correspondant 11, 12 peut être tirée du caisson 16, 18 ou rentrée dans celui-ci. Les deux joues internes 15, 17 délimitent donc avec la paroi inférieure 1, la paroi supérieure 2 et la paroi arrière 5 l'espace de rangement du meuble.

Selon un mode de réalisation particulier, la première joue interne 15 et la deuxième joue interne 17 ont une largeur inférieure à celle des parois latérales 3, 4. Ici, les joues internes 15, 17 reposent au niveau de leurs faces arrières respectives contre la paroi arrière 5.

De préférence, les deux parois latérales 3, 4 comportent chacune au niveau de leur face avant (opposée à leur face arrière respective faisant face à la paroi arrière 5) une portion recourbée 19 s'étendant partiellement le long de la face avant ouverte 6 du bâti. De la sorte, la fente du premier caisson 16 est délimitée par la portion recourbée 19 de la première paroi latérale 3 et par la face avant de la première joue interne 15 (opposée à la face arrière de la première joue interne 15) et la fente du deuxième caisson 18 est délimitée par la portion recourbée 19 de la deuxième paroi latérale 4 et par la face avant de la deuxième joue interne 17 (opposée à la face arrière de la deuxième joue interne 17).

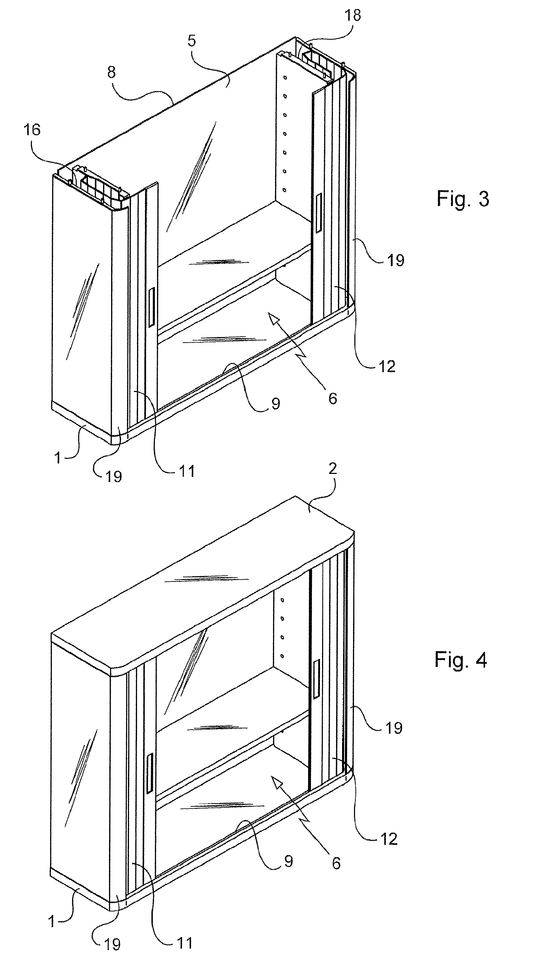

Les portions recourbées 19 permettent avantageusement de masquer l'intérieur des caissons, et notamment les parties lorsque celles-ci sont rentrées dans les caissons, de la vue de l'utilisateur (comme bien visible à la figure 4).

Selon un mode de réalisation particulier, la première joue interne 15 et la deuxième joue interne 17 comportent des ouvertures 20 (dont deux seulement sont référencées) s'étendant en regard les unes des autres, lesdites ouvertures 20 étant destinées à recevoir ici des éléments de supports, tels que des tétons, sur lesquels viennent reposer des éléments de rangements tels que des étagères (dont une seule est illustrée uniquement aux figures 3 et 4)

De préférence les joues internes 15, 17 comprennent des ouvertures 20 ménagées à intervalles réguliers sur toute la hauteur desdites joues internes 15, 17.

Ainsi, un utilisateur peut choisir la hauteur à laquelle il désire agencer l'élément de rangement correspondant.

La première joue interne 15 va être à présent détaillée, les deux joues internes étant ici identiques la description qui suit est également applicable à la deuxième joue interne 17.

Le meuble comporte des moyens d'emboîtement de la première joue interne 15 aux parois supérieure et inférieure. Lesdits moyens d'emboîtement comportent ici deux ensembles tenon/mortaises décrits plus en détails ci-dessous.

La première joue interne 15 comporte ainsi ici sur sa face inférieure un tenon inférieur 21 qui coopère avec une mortaise 22 correspondante ménagée dans la paroi inférieure 1. La première joue interne 15 comporte de plus ici sur sa face supérieure un tenon supérieur 23 qui coopère avec une mortaise correspondante ménagée dans la paroi supérieure 2 (non visible ici).

Ainsi, par la coopération des tenons avec les mortaises correspondantes, la première joue interne 15 est emboîtée aux parois supérieures et inférieures.

De préférence, les moyens d'emboîtement de la première joue interne 15 aux parois supérieures et inférieures comportent en outre des orifices agencés 27 dans les mortaises 22 de la paroi supérieure 2 et de la paroi inférieure 1 et des tétons 26 correspondants portés par les tenons 21, 23 de la première joue interne 15.

Ainsi, par un même geste, un utilisateur emboîte la première joue interne 15 dans la paroi inférieure 1 à la fois au niveau de l'ensemble tenon/mortaise et des ensembles téton/orifices et par un même geste l'utilisateur emboîte la paroi supérieure 2 sur la première joue interne 15 à la fois au niveau de l'ensemble tenon/mortaise et des ensembles téton/orifices.

La première joue interne 15 est ainsi particulièrement bien ancrée dans les parois supérieure 2 et inférieure 1 du meuble. Le meuble s'avère donc solide.

Selon un mode de réalisation particulier, les mortaises ont une hauteur (la hauteur étant bien entendu définie selon une direction normale au plan dans lequel s'étend la paroi inférieure 1) comprise entre 20 et 40 millimètres, les tenons ayant une hauteur correspondante. De préférence, les mortaises ont une hauteur d'environ 30 millimètres, les tenons ayant une hauteur correspondante.

De la sorte, la première joue interne 15 est davantage ancrée dans les parois supérieure 2 et inférieure 1. Le meuble s'avère encore une fois solide.

Selon un mode de réalisation particulier, les différentes parois, les joues internes et les différentes lames formant les parties du rideau 10 sont en bois massif.

Le meuble s'avère donc particulièrement solide.

De préférence, le bois est du hêtre.

Le meuble ainsi défini s'avère alors particulièrement solide tout en étant relativement léger.

Le montage particulièrement simple du meuble selon l'invention va être à présent décrit.

L'utilisateur commence par disposer à plat la paroi inférieure 1 sur laquelle il vient emboîter les deux parois latérales 3, 4.

Ensuite, l'utilisateur vient emboîter les deux joues internes 15, 17 sur la paroi inférieure.

L'utilisateur emboîte alors la paroi arrière 5 dans la paroi inférieure 1, les joues internes reposant alors contre ladite paroi arrière 5 et les faces arrières des parois latérales 3, 4 s'étendant au niveau de ladite paroi arrière 5.

L'utilisateur emboîte alors la paroi supérieure 2 sur les faces supérieures des joues internes et des parois latérales tout en emboîtant ladite paroi supérieure 2 dans la paroi arrière 5 pour achever le montage du meuble.

Puis l'utilisateur met en place les deux parties 11, 12 du rideau déformable 7 dans le bâti du meuble par l'avant dudit bâti. Cette étape de montage est facilitée ici par la présence des échancrures 28.

Le meuble de rangement selon l'invention peut donc être monté très facilement par l'utilisateur sans avoir besoin d'utiliser un quelconque outil particulier.

De préférence, le meuble est proposé en kit à assembler, les différentes parois, les joues internes et le rideau étant tous fournis en tant qu'éléments indépendants.

Les différentes parois et joues peuvent être superposées ce qui permet d'avoir un kit de volume peu important. Ceci facilite les problèmes de transport et de stockage.

Bien entendu l'invention n'est pas limitée au mode de réalisation décrit et on peut y apporter des variantes de réalisation sans sortir du cadre de l'invention tel que défini par les revendications.

En particulier, les joues internes pourront être différentes de ce qui a été décrit. Ainsi, bien qu'ici les joues internes soient conformées de sorte à venir se reposer sur la paroi arrière, les joues internes pourront ne pas être en contact avec ladite paroi arrière. Les joues internes pourront en variante être emboîtées à la paroi arrière par exemple par des ensembles tenon/mortaise. Les joues internes pourront simplement être liées aux parois supérieure et inférieure par exemple par des ensembles tenon/mortaise.

Le meuble pourra comporter une seule joue interne délimitant avec la paroi latérale correspondante un unique caisson.

Les parois supérieures et inférieures pourront comporter les tenons et les joues internes les mortaises.

Le rideau pourra également être différent de ce qui a été décrit. Par exemple le rideau pourra être d'une seule partie. Le rideau pourra être souple ou flexible au lieu d'être composé de lames articulées les unes aux autres. Par « rideau déformable » on entendra ainsi pour la présente demande tout rideau apte à se déformer pour que son profil suive une courbe particulière tout en ce que ledit rideau présente une raideur suffisante pour pouvoir suivre les chemins de glissement définis par les glissières en vis-à-vis.

Les parois, les joues internes et les différentes lames pourront être dans un tout autre matériau que celui indiqué comme du bois aggloméré. Le rideau pourra être en matière plastique. Bien qu'ici le bois décrit soit du hêtre, d'autres essences pourront être utilisées comme le pin.

Le meuble pourra ne pas comporter d'échancrure, le rideau étant par exemple monté avant la mise en place de la paroi supérieure.

## Revendications

1. Meuble de rangement comportant une paroi inférieure (1), une paroi supérieure (2), deux parois latérales (3, 4) et une paroi arrière (5), lesdites parois formant ensemble un bâti ouvert du meuble, le meuble comportant en outre un rideau (10) déformable de fermeture du bâti apte à coulisser dans des glissières (9) en vis-à-vis ménagées respectivement dans la paroi inférieure (1) et dans la paroi supérieure (2), le meuble comportant au moins une joue interne (15, 17) agencée entre la paroi inférieure et la paroi supérieure de sorte à faire face à l'une des parois latérales pour délimiter avec ladite paroi latérale un caisson (16, 18) à l'intérieur duquel ledit rideau déformable peut être rentré, les différentes parois, le rideau déformable et la joue étant conformés en des éléments indépendants, le meuble comportant uniquement des moyens d'emboîtement pour lier les différents parois et la joue interne ensemble.

2. Meuble selon la revendication 1, dans lequel les moyens d'emboîtement comportant un premier ensemble tenon/mortaise (21, 22) pour lier la joue interne à la paroi inférieure et un deuxième ensemble tenon/mortaise (23) pour lier la joue interne à la paroi supérieure.

3. Meuble selon la revendication 2, dans lequel les moyens d'emboîtement comportent en outre des ensembles tétons/orifices (26, 27) pour l'emboîtement de la joue interne (15, 17) aux parois supérieures et inférieures.

4. Meuble selon la revendication 3, dans lequel les tétons (26) sont portés par les tenons (21, 23) et les orifices (27) correspondants sont ménagés dans les mortaises (22).

5. Meuble selon la revendication 2, dans lequel la mortaise du premier ensemble est ménagée dans la paroi supérieure (2) et la mortaise du deuxième ensemble est ménagée dans la paroi inférieure (1), la joue interne (15, 17) comportant les tenons du premier ensemble et du deuxième ensemble.

6. Meuble selon la revendication 2, dans lequel la paroi supérieure (2) comporte le tenon du premier ensemble et la paroi inférieure (1) comporte le tenon du deuxième ensemble, les mortaises correspondantes du premier ensemble et du deuxième ensemble étant ménagées respectivement dans une face supérieure et une face inférieure de la joue interne (15).

7. Meuble selon la revendication 2, dans lequel les mortaises (22) ont une hauteur comprise entre 20 et 40 millimètres et les tenons (21, 22) ont une hauteur identique à celles des mortaises.

8. Meuble selon la revendication 1, dans lequel le meuble comporte une deuxième joue interne (17), la deuxième joue interne délimitant avec l'autre paroi latérale un deuxième caisson (18) dans lequel le rideau peut être rentré.

9. Meuble selon la revendication 1, dans lequel le meuble est proposé en kit à assembler, les différentes parois, la joue interne (15, 17) et le rideau (10) étant tous fournis en tant qu'éléments indépendants.

10. Meuble selon la revendication 1, dans lequel au moins les parois latérales (3, 4) et la joue interne (15, 17) sont à base de bois.

11. Meuble selon la revendication 10, dans lequel les parois latérales (3, 4), la paroi supérieure (2), la paroi inférieure (1), la paroi arrière (5) et la joue interne (15, 17) sont en bois massif.

12. Meuble selon la revendication 10 ou la revendication 11, dans lequel le bois est du hêtre.
